# EUROPEAN PATENT APPLICATION

(11) **EP 2 551 514 A2**
(43) Date of publication of application: **30.01.2013**
(21) Application number: 12177661.1
(22) Date of filing: 24.07.2012
(51) Int. Cl.: F03D 7/02

(54) **Redundant pitch control for wind turbine blade**

(30) Priority: 27.07.2011 DE 102011079939
(71) Applicant: Karl E. Brinkmann GmbH, 32683 Barntrup (DE)
(72) Inventor: Köhnke, Andrè, 32683 Barntrup (DE); Schäferfranz, Ruven, 32683 Barntrup (DE)
(74) Representative: Stöckeler, Ferdinand

(57) **Abstract**

A control device that is implemented to control an angular setting of a rotor blade of a wind power plant includes a drive motor including first and second windings that are galvanically isolated from one another, wherein the drive motor can be driven by both or only one of the first and second windings to change an angular setting of the rotor blade relative to the hub on which the rotor blade is mounted. A first pitch means comprising a first frequency converter and a first emergency power supply is implemented to provide the first winding with drive signals. A second pitch means that comprises a second frequency converter and a second emergency power supply is implemented to provide a second winding with drive signals. A wind power plant includes a respective control means for each of a plurality of rotor blades mounted on a hub. The two pitch means provide a redundant system allowing control of the angular setting of a rotor blade of a wind power plant even when one of the two pitch means for the drive motor has failed.

## Description

The present invention relates to a control device that is implemented to control an angular setting of a rotor blade of a wind power plant and a wind power plant having a respective control device.

A wind power plant converts kinetic wind energy into electric energy and normally feeds the same into the power supply network. This takes place in that the kinetic energy of the wind flow acts on the rotor blades, such that the rotor is placed into a rotational movement. The rotor passes the rotational energy on to a generator where the same is converted into electric energy.

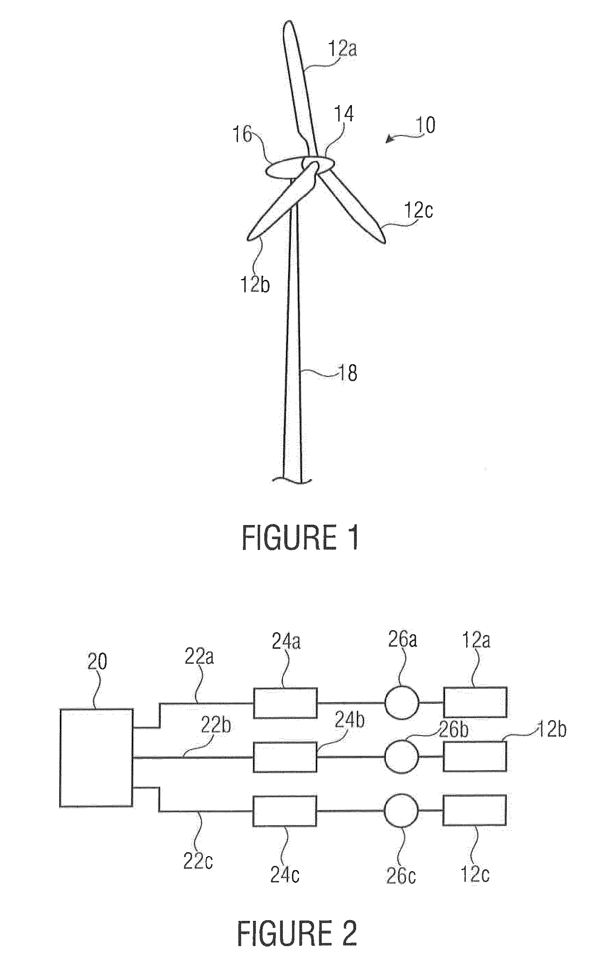

Fig. 1 shows a schematic illustration of a wind power plant or wind energy plant and comprises a rotor 10 having three rotor blades 12a, 12b and 12c which are mounted on a rotatable hub 14. The hub 14 is pivoted on a pod 16. The pod 16 is mounted on a tower 18, wherein the pod is rotatable in a horizontal plane relative to the tower, such that the rotor blades 12a-12c can rotate around an axis oriented towards the wind. In smaller plants, the rotor can be rotated automatically into the correct direction by the wind. In larger plants, the wind direction is determined by means of a wind direction transmitter and the orientation of the rotor can take place by means of servomotors.

In wind power plants enabling power control, change of an angular setting of the rotor blades 12a-12c relative to the hub 14 where the rotor blades are mounted can take place. Thereby, the rotor blades can be rotated more or less into the wind.

Thus, power control of wind energy plants can take place by means of active adjustment of the blade angle of the rotor blades where the rotor blades are rotated out of the wind around their longitudinal axis. For persons skilled in the art, the concept of this power limitation at high wind speeds is known as so-called "pitch control". The same is used for protecting the generator and other components of the plant, such as transmission or pod, from overload. An advantage of pitch control is that the rotor rotational speed can be influenced across the entire power spectrum and the dynamic loads of the individual components of a wind energy plant can be reduced.

To implement such pitch control, additional technical effort is needed since an adjustment mechanism for the rotor blades has to be incorporated in the rotor hub. For that purpose, respective control devices are provided which are known to persons skilled in the art as pitch systems for realizing rotor blade adjustment of a wind energy plant.

Such pitch systems can comprise, for each rotor blade, a drive motor, a frequency converter for control/regulation of the drive motor, which is also known as pitch converter to person skilled in the art, and an emergency power supply, such as in the form of ultra capacitor modules, wherein these components enable the rotor blades to be positioned exactly. Thus, respective wind energy plants are particularly suitable for operation in offshore regions, wherein due to the fast growth of the power spectrum of wind energy plants and the extreme climatic conditions in the offshore region the requirements regarding implementation and dimensioning of pitch systems and their components increase.

The pitch converter represents an inverter providing drive signals for setting the associated engine based on respective control signals and/or sensor feedback signals for performing angular setting of the rotor blades. The pitch converter can be in constant communication with a central control running the operation of the wind energy plant and controls the drive motor performing rotor blade adjustment. Thus, the pitch system is that the decisive power limitation and brake system as well safety system of a wind energy plant.

A schematic illustration of a respective system for the three rotor blades 12a, 12b and 12c is shown in Fig. 2. A central control 20 is connected to pitch converters 24a, 24b and 24c via suitable communication buses 22a, 22b and 22c. The output of each pitch converter 24a-24c is connected to a drive motor 26a, 26b and 26c, each of which is coupled to one of the rotor blades 12a, 12b and 12c. Thus, a respective pitch system is allocated to each of the rotor blades 12a-12c.

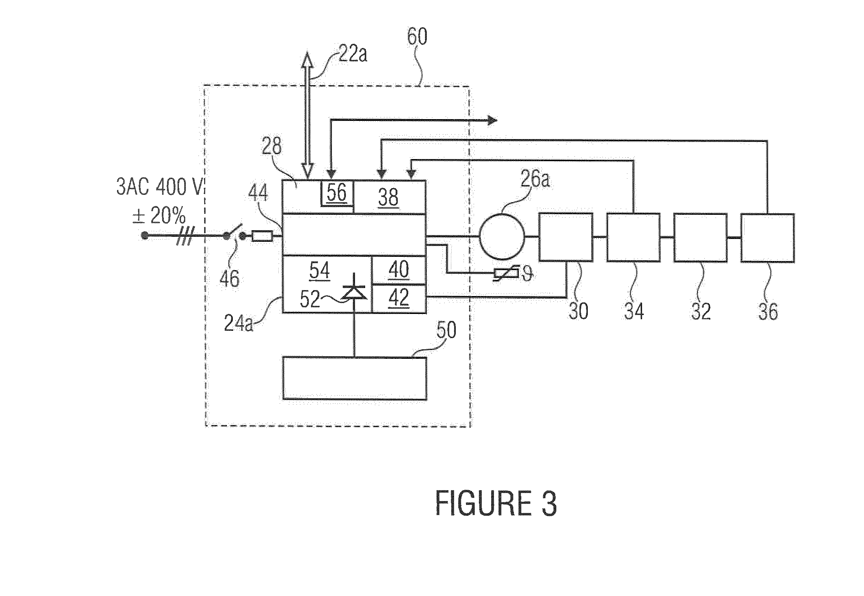

Fig. 3 shows a schematic illustration of a pitch system allocated to a rotor blade, for example the system allocated to rotor blade 12a. The pitch system comprises the pitch converter 24a, which is connected to a central control, for example via a communication bus 22a, for example a typical CAN bus or Profibus. An output of the pitch converter is connected to the motor 26a which is coupled to the rotor blade 12a (not shown in Fig. 3) via brake 30 and transmission 32 for adjusting the angle of the rotor blade around the longitudinal axis of the same relative to the hub 14. A sensor 34 outputting signals that enable determination of the exact position of the motor 26a as well as a sensor 36 outputting signals that enable determination of the exact position of the rotor blade can be provided. Signals of sensors 34 and 36 are returned to the pitch converter via a return module 38. The brake 30 is coupled to the pitch converter 24a via a brake module 40 and a brake supply module 42. An energy supply terminal 44 of the pitch converter 24a can be coupled to an external power supply network (3 AC 400 V +/- 20 %) via a switch 46. Further, energy storage 50 is provided which is coupled, to a charge and monitoring module 54 of the pitch converter 24a, for example via a diode 52 for decoupling. The energy storage 50 can be implemented, for example, by ultra capacitor modules or batteries. An input/output interface 56 of the pitch converter can further be coupled to other components of the wind energy plant, for example a discharge switch, safety chain or temperature sensors as indicated in Fig. 3 by an arrow, wherein analog values and/or digital values can be transmitted via the interface 56.

The pitch converter 24a can, for example, be the pitch converter KEB COMBIVERT P6 of the applicant. Further, Fig. 3 shows schematically a switch cabinet by reference numeral 60, such that it can be seen from Fig. 3 that the pitch converter 24a and the ultra capacitor modules are arranged as energy storage 50 in the switch cabinet 60. Thus, the system shown in Fig. 3 represents a standard pitch system where ultra capacitor modules are arranged as energy storages 50 in the lower region of the switch cabinet 60. The communication bus 22a is coupled to an SPS module 28 of the pitch converter 24a.

During operation, the pitch converter 24a can control the angular setting θ of the associated rotor blade based on output signals of sensors 34 and 36, which are returned to the return module 38, as well as control signals that are obtained via the communication bus 22a. If supply of the network is interrupted, a safe and maintenance free continuous operation of the pitch system can be ensured via the backup solution of the energy storage 50.

The pitch system can be built in a robust and compact manner, wherein the switch cabinet 60 can consist, for example, of stainless steel. Due to the few electronic components in the switch cabinet and the robust material, the complete system can offer safe protection against external environmental influences. The terminals at the switch cabinet, for example brake, motor and transmitter terminals can have specific protective seals, such that the interior of the switch cabinet is protected. The main input connector and limit switch connector on the other side can be based on the same principle. Thus, the interior of the switch cabinet can be effectively protected against outer influences such as moisture and dirt.

Thus, Fig. 3 shows a block diagram of the standard pitch system with integrated and external assemblies, wherein the servo motor brake combination (brake motor) and motor feedbacks are outside of the switch cabinet 60. The motor feedbacks, the power line and the transmitter lines can be formed of specific materials which can also resist extreme temperatures of -50 °C to 130 °C. These motor and transmitter lines can further be preassembled and be provided with a robust connector system such that installation times can be reduced further. Thus, these lines are particularly suitable for the usage in offshore wind energy plants.

The drive motor (servo motor) 26 and the brake can also be individually designed for the usage in offshore wind energy plants, such that in the case of failure, i.e. when only the voltage of, for example, 170 V provided by the energy storage 50 exists, it is still possible to obtain enough torque for driving the rotor blade into the flag position (emergency propulsion) where the same can be held via the brake.

The interior of the switch cabinet 16 can be constructed in a very simple manner, wherein the pitch converter 24a can be integrated centrally in the switch cabinet. All external assemblies can be integrated in the pitch converter for generating the system in a more robust and failure-free manner. By integrating charge and energy storage monitoring, SPS control with input/output modules, brake control as well as optional electronic devices such as air humidity sensor and heating, the system can be structured in a compact manner and provide maximum flexibility. In order to ensure bus communication via CAN or Profibus and limit switch communication, individual cable feedthroughs can be installed in the switch cabinet housing. Al large part of the within the switch cabinet 60 is taken up by the ultra capacitor modules forming the energy storage 50 wherein the diode 52 serves for decoupling the ultra capacitors. Thus, external wiring effort can be reduced. Since the individual ultra capacitors have a low cell voltage, the same are connected in series for ensuring, in the case of failure, the required voltage for energy propelling for bringing the allocated rotor blade into the flag position, which is the reason for the large spatial requirements of energy storages in the switch cabinet. Generally, as has been stated, the complete pitch system is supplied via a 400 V supply. The pitch system illustrated in Fig. 3 can hence be a compact overall unit ready for connection which can be tailor-made for the individual requirements of offshore wind energy plants. The system can provide safe blade adjustment of wind power plants in a compact and precise manner.

The pitch converter can be implemented to operate both with asynchronous motors and synchronous motors. More accurately, software integrated into the pitch converter can enable the input of motor parameters such that both motor variations are supported. Both motor variations are provided with motor feedback by default, wherein the motor feedback 34 shown in Fig. 3 serves for determining the exact position of the motor, while a second transmitter representing the blade feedback 36 can be an SSI transmitter (SSI = synchronous serial interface) by default, which is located at the ring gear of the rotor blade. The feedback signals can be evaluated in the pitch converter or be passed on by the same to the central control unit of the wind energy plant, for example via communication bus 22a.

By chunks of ice formed in the rotor blades, transmitter cables can be damaged or even separated. If such a case of damaging is detected in the pitch converter, switching to a so-called SCL operation (SCL = sensorless closed loop) can take place, which is based on a mathematical model of the synchronous motor by which, with known motor data, the rotor position can be reproduced by means of the measured current. Thus, the operation of the whole plant is ensured.

Preferably, ultra capacitors are used as energy storages 50, since the same have a much higher energy density than conventional capacitors, present energy with wide temperature spectrum, are insensitive against impact, vibration-resistant and overload-resistant and enable million fold charge and discharge. The energy storage 50 serves for backup supply and provides, for example, in a hurricane, the option to bring the rotor blades out of the wind, even when the connection to the electrical network is interrupted. As has been stated, in wind energy plants, the rotor blades are rotated by independent electric drive systems relative to the rotor, i.e. the hub, which serves to protect the wind energy plants at high wind forces to protect the wind energy plant from mechanical stresses. Here, the wind speed can be extracted from the output power of the system wherein, when the output power exceeds a power limit, the rotor blade position can be adapted accordingly. Such drive systems require a lot of energy for this relatively short time for adapting the rotor blade position. Normally, for providing this amount of energy even during power failure, accumulators are used which are recently also replaced by ultra capacitors. The reason for this is that ultra capacitors can provide large amounts of energy for a short time and that ultra capacitors have a significantly longer life cycle and lower temperature dependency in adverse conditions in which the wind energy plant, in particular the offshore wind energy plant, is used.

Particularly in high power wind turbines having a power of more than 5 MW or more than 10 MW, reliability is a main concern.

It is the object of the present invention to provide a control device for controlling the angular setting of a rotor blade of a wind power plant as well as a wind power plant having increased reliability.

This object is solved by a control device according to claim 1 and a wind power plant according to claim 15.

Embodiments of the present invention provide a control device that is implemented to control an angular setting of a rotor blade of a wind power plant, comprising:
a drive motor comprising first and second windings galvanically isolated from one another, wherein the drive motor can be driven by both or only one of the first and second windings for changing an angular setting of the rotor blade relative to the hub on which the rotor blade is mounted;
a first pitch means that is implemented to provide the first winding with drive signals and that comprises a first frequency converter and a first emergency power supply; and
a second pitch means that is implemented to provide the second winding with drive signals and that comprises a second frequency converter and a second emergency power supply.

Embodiments of the present invention provide a wind power plant, comprising:
a rotor with a hub;
at least one rotor blade mounted on the hub; and
a respective control device for controlling the angular setting of the at least one rotor blade relative to the hub.

Embodiments of the present invention provide a control device that enables control of an angular setting of a rotor blade of a wind power plant even when a frequency converter as provided in known systems as described above, fails. For enabling this, in embodiments of the invention, a drive motor having two galvanically isolated windings is provided, wherein a separate pitch means with frequency converter and emergency power supply is provided for each of the windings. In other ords, together with a drive motor comprising galvanically isolated windings, a redundant system is provided which enables control of the angular setting of a rotor blade of a wind power plant even when one of the two pitch means for the drive motor has failed. Such a redundant system is particularly suitable for high power turbines and/or offshore turbines where and replacement operations are particularly expensive. Thus, in embodiments of the invention, each drive motor allocated to one of the rotor blades is provided with an individual backup, such that guaranteed operation is ensured, even when one of the respective pitch means fails.

In embodiments of the invention, the control device comprises a switching means that electrically isolates the pitch means from the drive motor when one of them fails, such that it can be ensured that when a motor winding or one of the pitch means fails, no malfunction is transferred to the functioning system.

Embodiments of the invention can be implemented to operate with synchronous motors or asynchronous motors. Synchronous motors are used in drive engineering in combination with matching control electronics, such as a frequency converter. Their field of usage is where short-term fast change of rotational speed is desired. Synchronous motors as highly dynamic and acceleration optimized drives are suitable for regulating angles and positions, wherein synchronous motors can operate for positioning tasks with a high resolution for the angular position. From standstill, the synchronous motors can be driven to their nominal rotational speed in only a few milliseconds, brake during the same time and convert their rotational direction. A synchronous motor consists of a rotor and a stator. In the stator, the stator winding with three winding phases can exist, wherein the exciter winding can be introduced into the rotor. In embodiments of the invention, the rotor includes two galvanically isolated exciter windings that are implemented such that the drive motor can be driven by both or only one of the two windings. The motor has two power terminals for the galvanically isolated exciter windings. In embodiments of the invention, the motor is arranged in a housing practically including two separate electric motors due to the two separate exciter windings as well as the separate power terminals. The further structure of such motors is known to persons skilled in the art and necessitates no further discussion herein.

Thus, in contrast to known plants, the present invention enables maintenance of operation even when a motor winding or one of the pitch means allocated to the drive motor fails.

In embodiments of the present invention, the emergency power supplies are implemented by capacitor modules and in particular ultra capacitor modules with the respective advantages as discussed above.

In embodiments of the invention, the control device is implemented to control the angular setting of a plurality of rotor blades of a wind power plant, for example three rotor blades as shown in Fig. 1. Here, the control device comprises a respective drive motor for each rotor blade and respective first and second pitch means. In alternative embodiments, another number of rotor blades and correspondingly another number of drive motors and associated pitch means can be provided.

In embodiments of the invention, the pitch means is implemented to generate the first and second drive signals in dependence on one or several feedback signals of a position transmitter implemented to detect a position of the drive motor and/or a position transmitter implemented to detect the angular setting of the rotor blade for regulating the angular setting of the rotor blade. In embodiments, the drive motor comprises a first position transmitter coupled to the first pitch means and a second position transmitter coupled to the second pitch means to provide a feedback signal to the pitch means in a redundant and separate manner. In embodiments, a central control unit can be provided, which is implemented to control the pitch means in dependence on one or several feedback signals of a position transmitter implemented to detect a position of the drive motor and/or a position transmitter implemented to detect the angular setting of the rotor blade to generate the first and second drive signals for regulating the angular setting of the rotor blade.

In embodiments, the control device further comprises a brake that is implemented to hold the rotor blade at a specific angular setting.

In embodiments, the control device further comprises a charge monitoring module that is implemented to monitor and maintain a charge of the emergency power supply. In embodiments of the invention, the control device is implemented to control, in dependence on a rotational speed of the hub representing a rotor together with one of the several rotor blades to implement partial load operation, nominal operation or overload operation.

In embodiments of the present invention, one of the first and second pitch means acts as master and the other of the two pitch means as slave, such that the master controls operation of the slave. If one of the first or second pitch means fails, either the other pitch means can be used for positioning the rotor blade at a predetermined angular setting (for example a flag position) to bring the plant into a safe state, or, when one of the two pitch means fails, the control device can be implemented to maintain operation by using the non-failed pitch means.

In embodiments of the invention, the control device including the drive motor and the pitch means is arranged in the hub of a rotor of a wind power plant. In embodiments of the invention, the structure of each of the pitch means can substantially correspond to the structure as described above with reference to the pitch converter 24a that can represent a respective pitch means.

Embodiments of the present invention will be discussed below with reference to the accompanying drawings. They show:
- Fig. 1: schematically an illustration of a wind energy plant;
- Fig. 2: a schematic illustration of a wind energy plant having a pitch system for each of three rotor blades;
- Fig. 3: a schematic block diagram of a standard pitch system; and
- Fig. 4: a schematic block diagram showing an embodiment of an inventive control device.

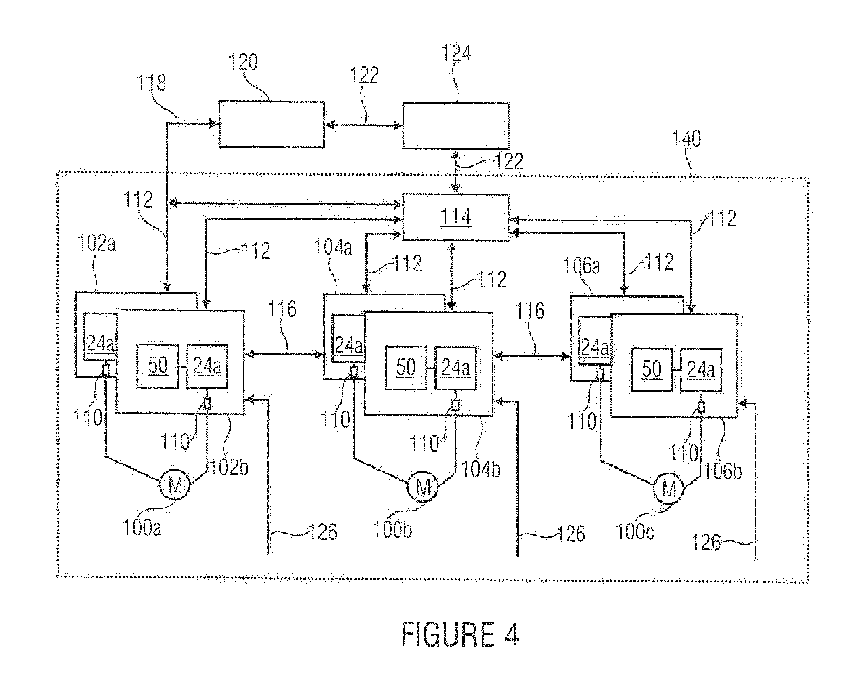

Fig. 4 shows a control device that is implemented to control the angular setting of three rotor blades of a wind energy plant. However, it is obvious that alternative embodiments can be implemented to control the angular setting of another number of rotor blades, for example two or four rotor blades.

A drive motor 100a, 100b and 100c is provided for each rotor blade (not shown in Fig. 4). Each of the drive motors 100a-100c has two galvanically isolated exciter windings such that the respective drive motor can be driven by both or only one of the two windings. Each of the exciter windings of motors 100a-100c is coupled to an associated pitch means 102a, 104a, 102b, 104b, 106a, 106b. The pitch means can essentially have a structure and function as described above with reference to Fig. 3. More accurately, each of the pitch means comprises frequency converter (pitch converter) 24a and energy storage 50, for example in the form of ultra capacitor modules. Each of the frequency converters 24a is connected to one of the exciter windings of the associated drive motor 100a-100c via a respective switch 110, such that for the case of failure of a frequency converter or an exciter winding, separation from the respective frequency converter can be performed by the switch.

As shown in Fig. 4, the individual pitch means 102a-106b are connected to a central control 114, which can be referred to as pitch control unit, via respective busses 112, which can, for example, be Ethernet busses. Further, the pitch means can also be interconnected by means of respective busses in order to be able to implement a safety chain as schematically indicated by busses 116. The safety chain can be connected to an external safety control 120 via a further bus 118. The central control unit 114 and the safety control 120 can also be connected to a turbine control unit 124 via respective busses 122. Additional input signals can be supplied to the respective driver circuit as indicated by the errors referred to by reference number 126 in Fig. 4. For example, thereby, limit switches can be implemented and controlled which result from safety-related aspects and which are located on the ring gears of the rotor blades. In Fig. 4, the hub is schematically indicated by the rectangle 140, such that it can be seen in Fig. 4 which components of the control device are within the hub. The turbine control unit 124, also referred to as main monitoring unit, is outside the hub. The turbine control unit monitors the complete operation of the wind turbine, i.e. the wind energy plant. Depending on the producer of the wind energy plant, the turbine control unit 124 can be in the pod (16 in Fig. 1) or the tower (18 in Fig. 1). The safety control 120 subordinate to the turbine control unit 124, which can also be referred to as safety pitch logic control, offers complete safety monitoring of any pitch system within the hub. The safety control 120 can be implemented as memory programmable control 120 and can be able to monitor all electric data, operation and error notifications as well as network-specific data. The safety control 120 can be in constant communication with the turbine control unit 124.

As has already been stated above, all components are secured among each other by means of a safety chain. If a case of failure occurs in one of the three pitch systems (each consisting of frequency converter 24a, emergency power supply 50 and allocated exciter winding of the respective motor 100a - 100c), a safety operation will be initiated by means of a safety relay (not illustrated) in order to ensure safety of the complete plant. The complete system, with exception of the turbine control unit 124 and the safety control 120, is accommodated within the hub 140. The three redundant pitch systems have exactly the same structure as regards to hardware technology, wherein, as has been stated, one redundant pitch system per rotor blade is used. Thus, a pitch system allocated to a rotor blade can comprise two switch cabinets, wherein a frequency converter and ultra-capacitor modules exist in each of switch cabinets. The frequency converter can, for example, be implemented by a pitch converter with the name KEB COMBIVERT P6, as described above. The switching means 110 can, for example, be implemented by a power contactor to isolate the allocated pitch means from the connected motor in case of a failure. The redundancy of the system allows that operation is continued, since the remaining pitch means is sufficient to drive the drive motor 100a via the respectively associated exciter winding. As has been stated above, each of the drive motors 100a - 100c comprises two galvanically isolated windings in a motor housing as well as two power terminals, which allows the connection of two pitch systems. The advantage of this individual construction is the resulting redundancy of the whole pitch system. As has been stated above, further terminals of the redundant pitch system (see terminals 126) follow for safety reasons and information exchange. For example, further lines lead from the switch cabinet to the limit switches (-2°, -89°, 95°) which are on the ring gears of the rotor blades.

The frequency converters 24a are programmed with respective control algorithms for outputting appropriate control signals to the drive motors for controlling the angular setting of the drive motors relative to the hub. The central control 114 offers the option to transmit some of the control algorithms from the frequency converters 24a into this central control unit 114. In this case, the central control 114 takes on the communication between the turbine control unit 124 and the respective frequency converters 24a. For ensuring safe operation of the plant, the central control 114 is also integrated into the safety chain.

Redundancy is the greatest advantage of embodiments of the invention, since apart from safe operation, even when a drive unit fails, there is the option to remove and service a system (consisting, for example, of a switch cabinet comprising frequency converter 24a and associated energy storage 50) while the redundant second system maintains the operation of the wind turbine. Specifically in offshore turbines, this can be a decisive factor. In embodiments of the invention, only components are used that are already used in smaller wind turbines, which significantly increases product variety and availability. Embodiments of the invention are particularly implemented for high power wind energy plants with expected powers of 5 MW to 10 MW.

The pitch system or control device as shown in Fig. 4 is implemented to maintain all parameters of a wind energy plant that are included in the control. The operating parameters are stored in the turbine control unit 124, wherein, in embodiments, for example the central control unit 114 queries all parameters important for the operation in a specific cycle and passes the same on to the frequency converter. Also, continuous information exchange can take place between the central control unit 114 and each of the frequency converters 24a.

In particular, the control means can be designed to implement different modes of operation, wherein a difference can be made between operation modes partial load operation, nominal operation and overload operation. In partial load operation of a wind energy plant, low wind energy speeds prevail. In partial load operation, the rotor blades are rotated into the wind with maximum blade angle to obtain optimum efficiency. The control device regulates the rotational speed of the rotor below the nominal rotational speed to be set. Now, the delivered power depends on the wind speed.

If the wind energy plant exceeds the nominal rotational speed of the rotor, the control device changes the angle of the rotor blades such that the rotor is constantly held at nominal rotational speed. Thus, the wind energy plant constantly produces its nominal power. Consequently, this operation is called nominal operation. The central control unit 114 detects these parameters and passes them on to the frequency converters 24a. The frequency converters 24a now adjust the rotor blades ("pitch" the rotor blades) such that the optimum power (nominal power) of the wind energy plant can be obtained.

At increased wind speeds, i.e. in overload operation, the wind energy plant has to be stopped due to the high resulting load. This means that the rotor blades are rotated by, for example, 90° into the so called flag position. The control unit 114 communicates the parameters to the frequency converters to initiate the safety operation, i.e. bringing the rotor blades into the flag position. Thus, the heavy mechanical stresses on the wind energy plants in coarse weather conditions with high wind speeds can be reduced.

When starting an inventive control device, at first, each winding of the drive motors can be individually connected to the associated pitch means and taken into operation, for example to adapt the motor data from the technical data sheet into the frequency converter and to possibly adapt the regulation parameters until, for example, stable rotation results. As soon as the two pitch means are each set to their associated winding, the two systems can be synchronized, for which there are different variations that can be followed. The first variation is a torque regulation with master-slave hierarchy, wherein the control predetermines a target torque (torque limit) and possibly a rotational speed limit nₘₐₓ. The rotational speed is adjusted according to the characteristic curve of the drive motor of 0... mₘₐₓ. In this regulation method, one of the frequency converters, i.e. the pitch means allocated to a drive motor receives the torque target value from the superior control 114. This converter is considered to be master of the system. Depending on the rotational speed/torque characteristic, the aster sets the correct rotational speed at the drive motor. At the same time, the master analogously transmits the rotational speed signal that it has set to the second pitch means connected to the other winding, which is called slave. Then, this second pitch means follows the master, also under considering the respective current and torque limits.

A second variation that can be followed is rotational speed regulation with master-slave hierarchy. Here, the superior control 114 predetermines a target rotational speed (analogously or digitally) and transmits a respective rotational speed signal to the master, which the same follows with adjustable ramps by considering the torque limits. This pitch means acting as slave follows the master, as in the torque regulation.

A third variation is position regulation with a master-slave hierarchy where the superior control predetermines a target position and transmits the same to the master. The position regulator integrated in the master moves to this position by considering the maximum rotational speed, the torque limits and with adjustable ramps. The motor transmitter signal indicates the current position to the master. Again, as in the other master-slave hierarchies, the master transmits respective control signals to the pitch means connected to the other winding. In all three regulation methods, the turbine control unit can alternate between master and slave if the master malfunctions or is defect. Thus, it can be ensured that redundant operation is guaranteed.

In embodiments of the invention, the transmitter signal by which the position of the motor is returned can be a resolver signal, which cannot be split up. For supplying each drive section, i.e. each pitch means with position values of the driven motor part, a separate transmitter can be used for each drive string or drive section. Thus, in embodiments for the redundant system, two resolvers (angle position transmitters) are intended, which are mounted on the non-drive side of the drive motor and form the termination of the motor. When a drive system (pitch means and allocated winding) fails, it is ensured that the remaining string can guarantee further operation of the wind energy plant or guided emergency propelling can be performed. The same principle applies also to the SSI transmitters at the blade ring, which serve as reference and control for the respective drive section. Here, in embodiments, one transmitter system each is arranged per drive section.

In embodiments, a DC brake (24V) (DC = direct current) can be used as a brake (see brake 30 in Fig. 3). In alternative embodiments, high volt brakes with a direct voltage range of 100 - 300 V can be operated. The integrated brake module 40 and the integrated brake supply module 42 ensure safe operation, such that external components can be saved. Output power of 100 W and switching current of 4 A can be provided by the frequency converters for the brake. Further, cable break detection can be integrated. The brake output can be implemented in a short circuit and ground leakage save manner. In embodiments of the invention, where a redundant electric pitch system is provided, the control signal is routed via both frequency converters associated to a drive motor for the non-drive side flanged holding brake, and then transmitted to the brake (brake 30 in Fig. 3). Thereby, it can be guaranteed that the brake properly opens and closes during operation, wherein during failure of a drive section (frequency converter and allocated exciter winding) it is guaranteed that the brake is still controlled via a signal and can be operated when needed. In the following, the operation of inventive control devices will be discussed for the case when electronic components fail. For detecting potential hardware errors, measures for error detection and reaction to detected errors are provided. Embodiments of the frequency converter (for example 24a in Figs. 3 and 4) can be implemented to detect motor transmitter errors. In embodiments of the invention, the frequency converter is programmed to perform, during this error, automatic emergency propelling by means of SCL operation. Thereby, the pitch means or frequency converter acting as current slave can be started via the safety chain.

If an error occurs in one of the pitch means, the safety chain is independently activated. Depending on the philosophy, the wind energy plant can be operated further via the second drive section or automatic emergency propelling can be initiated. In both cases, the defect drive section is switched off by means of the provided switching means 110, for example the central control 114. Thereby, the moment available for the drive motor is reduced by half and adjustment of the allocated rotor blade takes place at lower speed. In the case of operating the plant further, energy generation is guaranteed and failures can be avoided. The defect drive section can then be replaced during the next routine inspection by the wind park operator. This redundant operation is extremely important, particularly for offshore plants since reaching the plant is quite problematic and involves high costs.

If a communication error occurs between one of the pitch means and the turbine control unit, this presents a serious case of error, which has, in embodiments of the invention, the effect of initiating an immediate emergency propelling independent of whether a drive section still operates in an error-free manner.

If an error occurs in the control part of the pitch means (the frequency converter), this can be detected by a monitoring module (watchdog) in the pitch means or the central control unit, and the safety chain can be opened. The drive section with the pitch means where the error occurred in the control part is correspondingly switched off from the system and the remaining drive section guarantees continuous operation or initiates emergency propelling. In embodiments, emergency propelling can be started by means of a power splitting processor, which seriously increases the safety of the whole wind energy plant.

If a defect of the motor cable of one of the drive sections occurs, for example due to falling parts, such as ice, this drive section is immediately separated from the system by means of the switching means. As long as no short circuit of two phases exists, the second drive section can guarantee further operation of the wind energy plant.

There are also errors or problems on the occurrence of which the redundant operation of the wind energy plant cannot be maintained. These are, for example, errors where a brake or brake cable is defect, such that the brake is applied and blocks the drive. If the gear (see gear 32 in Fig. 3), which can, for example, be a planetary gear, is defect or blocks, the safety chain is opened and the remaining two rotor blades perform emergency propelling for stopping the wind energy plant. In the cases where redundant operation cannot be maintained, the safety chain has to be activated so that the wind energy plant is taken out of the wind. This is the worst case which the operators do not like at all, since no energy generation takes place. In order to keep downtimes as low as possible, a service team has to be sent to the offshore wind park, wherein such a service mission is very expensive in particular since reaching the plant, compared to onshore wind parks, is very expensive. Embodiments of the present invention are advantageous in that they can significantly reduce the number of such service missions.

In the following system, behavior during voltage failure will be discussed. If, for different reasons, the main supply of the control device (the pitch system) fails, a very fast reaction of the emergency supply will have to take place. As has been described above with reference to Fig. 4, in embodiments of the invention, every drive section is provided with an individual backup in the form of energy storages 50. In embodiments, the energy storage is formed by an ultra-capacitor battery implemented for the calculated energy requirements. Since the ultra capacitors are continuously connected to the frequency converter, in contrary to lead-gel batteries, fast changeover in the case of failure is ensured. The voltage of the ultra capacitors is permanently controlled due to the continuous connection with the frequency converter 24a, and possibly readjusted by the integrated charge and monitoring module 54 (see Fig. 3).

In embodiments of the invention, operation of the wind energy plant can be maintained for a certain time by energy storages 50. This can be used in embodiments for regulating momentary short term voltage drops. However, in the normal state, when the main supply fails, emergency propelling will be initiated. The implementation of the ultra capacitors depends strongly on the requirements and in particular the duration, repetition, speed and energy requirements during emergency propelling. Depending on these values, the number of required ultra capacitors and the required capacity can be calculated. If the energy storage is dimensioned accordingly, after the required emergency propelling is terminated, the energy density of the ultra capacitors is almost used up and recharge has to take place. Due to a charge current of approximately 5 A, the ultra capacitors can be used again after approximately 10 minutes, but only when the main supply exists again. In embodiments of the invention, a longer failure of the main supply can be treated as critical error in the system, which results in a respective examination. During that, the control device (the pitch system) has sufficient time to recharge the energy storage.

The above description relates in particular to control methods that can be performed by using an available frequency converter of the applicant, namely KEB COMBIVERT P6. It is obvious for people skilled in the art that the invention can be implemented by using other frequency converters and that, with the development of new programmable controls, new control methods can be integrated in the pitch converters, wherein such new control methods using a redundant structure as described herein are within the claimed scope. For example, in embodiments of the invention, complicated control algorithms that are nowadays still computed by the turbine control unit and transmitted to the frequency converters via bus, can then be directly evaluated at the executing position and respective reactions can be initiated. This would, advantageously, have the effect of saving or minimizing the turbine control unit.

In embodiments of the invention, the frequency converters of the pitch means can further be able to operate with the same hardware instead of synchronous motors, asynchronous motors and DC motors. By changing the motor parameters within the software of the frequency converters, the change of the motor to be used can be detected, such that an operator is able to use variable motor types, each with two galvanically isolated exciter windings, with the same drive section.

Thus, embodiments of the present invention provide a control device for controlling the angular setting of a rotor blade of a wind power plant which allows maintaining the operation of the wind power plant even in cases here it so far had not been possible, such that costs for maintenance and service can be reduced. Further, embodiments of the present invention relate to a wind power plant comprising a rotor with a hub, wherein rotor blades are mounted on the hub. For motor blade, a respective control device is provided, which comprises, as discussed in detail above, redundant drive sections, such that operation can be maintained if one of the drive sections fails.

## Claims

1. Control device that is implemented to control an angular setting of rotor blade (12a-12c) of a wind power plant, comprising:
a drive motor (100a-100c) comprising first and second windings galvanically isolated from one another, wherein the drive motor (100a-100c) can be driven by both or only one of the first and second windings for changing an angular setting of the rotor blade (12a-12c) relative to a hub (14) on which the rotor blade is mounted;
a first pitch means that is implemented to provide the first winding with drive signals and that comprises a first frequency converter (24a) and a first emergency power supply (50); and
a second pitch means that is implemented to provide the second winding with drive signals and that comprises a second frequency converter (24a) and a second emergency power supply (50).

2. Control device according to claim 1 comprising a switching means (110) to electrically isolate the same from the drive motor (100a-100c) during a failure of one of the pitch means.

3. Control device according to one of claims 1 or 2, wherein the first and second emergency power supplies (50) comprise capacitor modules.

4. Control device according to one of claims 1 to 3 that is implemented to control the angular setting of a plurality of rotor blades (12a-12c) of a wind power plant, wherein the control device comprises a respective drive motor (100a-100c) and respective first and second pitch means for each of the rotor blades (12a-12c).

5. Control device according to claim 4 that is implemented to control the angular setting of three rotor blades (12a-12c).

6. Control device according to one of claims 1 to 5, wherein the pitch means are implemented to detect the first and second drive signals in dependence on one or several feedback signals of a position transmitter (34) implemented to detect a position of the drive motor (100a-100c) and/or a position transmitter (36) that is implemented to detect the angular setting of the rotor blade (12a-12c) for regulating the angular setting of the rotor blade (12a-12c).

7. Control device according to claim 6, wherein the drive motor (100a-100c) comprises a first position transmitter coupled to the first pitch means and a second position transmitter coupled to the second pitch means.

8. Control device according to one of claims 1 to 5 comprising a central control unit (114), which is implemented to control the pitch means in dependence on one or several feedback signals of a position transmitter implemented to detect a position of the drive motor (100a-100c) and/or a position transmitter implemented to detect the angular setting of the rotor blade (12a-12c) to generate the first and second drive signals for regulating the angular setting of the rotor blade (12a-12c).

9. Control device according to one of claims 1 to 8, further comprising a brake (30) that is implemented to maintain the rotor blade (12a-12c) at a specific angular setting.

10. Control device according to one of claims 1 to 9, wherein the pitch means each comprise a charge monitoring module (54) that is implemented to monitor and maintain a charge of the emergency current supply (50).

11. Control device according to one of claims 1 to 10 that is implemented to control, in dependence on a rotational speed of the hub (14), the angular setting of the rotor blade (12a-12c) to implement partial load operation, nominal operation or overload operation.

12. Control device according to one of claims 1 to 11, wherein one of the first and second pitch means acting as master is implemented to transmit control signals to the other of the first and second pitch means acting as slave.

13. Control device according to one of 1 to 12 that is implemented to maintain, when the first or second pitch means fail, operation by using the non-failed pitch means.

14. Control device according to one of claims 1 to 13, wherein the drive motor (100a-100c) and the pitch are arranged in the hub (14) of a rotor (10) of a wind power plant.

15. Wind power plant, comprising:
a rotor (10) with a hub (14);
at least one rotor blade (12a-12c) mounted on the hub (14); and
a control device according to one of claims 1 to 14 for controlling the angular setting of the at least one rotor blade (12a-12c) relative to the hub (14).
